# EUROPEAN PATENT APPLICATION

(11) **EP 1 995 222 A1**
(43) Date of publication of application: **26.11.2008**
(21) Application number: 08008883.4
(22) Date of filing: 14.05.2008
(51) Int. Cl.: C03B 3/02

(54) **Method and system for preheating glass batch or ingredient(s)**

(30) Priority: 23.05.2007 US 805373
(71) Applicant: Johns Manville, Denver CO 80202 (US)
(72) Inventor: Pinkham, Daniel Jr., Highlands Ranch, CO 80126 (US); Groner, Gary, Littleton, CO 80128 (US); Demot, Gerard Joseph, Evergreen, CO 80439 (US)
(74) Representative: Dörr, Klaus

(57) **Abstract**

The invention includes a method and system for heating one or more ingredients of a glass batch or the entire glass batch that is then used to make molten glass using waste hot gases (110) from a system for generating electricity using a drive for an electrical generator that is powered by a heat engine that exhaust waste hot gases (110) having a temperature of at least about 200 degrees C. At least a portion of the electricity generated can be used to power manufacturing plant equipment and the waste hot exhaust gases (110) exhausted by the heat engine, such as a gas turbine (106), is used in a static or dynamic heat exchanger (132) to heat the entire glass batch (120) or one or more of the ingredients of the glass batch, prior to feeding the glass batch (150) into a glass melting furnace (152).

## Description

The invention involves systems including a heat engine for driving a generator of electricity for plant equipment, such as one or more motors on a glass making furnace, one or more ducts for transporting hot exhaust gases from the heat engine to a device for preheating a particulate material and methods of using waste hot exhaust gases from the heat engine to preheat a glass batch or one or more ingredients of a glass batch.

### Background

It is known to preheat batch for a glass making furnace as shown in U.S. Patent Nos. 4,519,814, 4,741,342, 5,807,418 and 6,615,612, the disclosures being herein incorporated by reference, using hot exhaust gases from the glass melting furnace to preheat cullet, glass batch or one or more of the ingredients of the batch. However, the hot exhaust gases from the glass melting furnace are more desirably used to preheat the oxidant gas, air, oxygen or oxygen enriched air, used to fire the burners in the furnace, and even to preheat the fossil fuel being fed to those burners to produce a flame temperature important to high productivity melting in the furnace.

It is also known to generate electricity using a gas turbine or other heat engine that exhausts gases at elevated temperatures and it is known to use these gases in a heat exchanger to preheat the air and/or gaseous fuel used to drive the gas turbine or heat engine.

### Summary of The Invention

The invention includes a method and system for generating electricity using a drive for the electrical generator that is powered by a heat engine, i.e. an engine that uses high pressure, hot gases produced by combustion of a fuel and an oxygen bearing gas, using at least a portion of the electricity generated to power one or more motors on manufacturing plant equipment and using the waste hot gases exhausted from the heat engine, such as a gas turbine, with or without a heat exchanger, to preheat glass batch, or one or more of the ingredients for a glass batch. By high pressure hot gases is meant having a pressure of at least about 4 psi gauge and a temperature of at least about 600 degrees C. The invention is useful in any glass melting system and process for making products from molten glass. Waste hot gases coming from a heat engine will usually exceed 200 degrees C., typically the temperature is in a range of about 390 - 450 degrees C. or higher, but the temperature of the waste exhaust gases can be hotter than 540 degrees C. The pressure of these hot waste hot gases exhausting from the heat engine will typically be less than 1 psi gauge, more typically less than 18 inches water column, however the pressure can be boosted by the use of a conventional fan that can be used to push the waste hot gases through one or more ducts for preheating glass batch or at least one ingredient of a glass batch.

In making molten glass, the major batch ingredients normally include two or more of silica sand, clay, limestone or lime, colemanite, feldspar and/or fluorospar. Sand, very high in silica content, is usually the major ingredient and it is the ingredient most often having the highest, or at least the second highest, melting point temperature of any batch ingredient, so it is particularly useful to preheat the silica sand. Most batches also include one or more calcium bearing minerals such as limestone, calcined limestone or lime, colemanite and dolomite and it is useful to preheat one or more of these ingredients, especially when they contain chemical water and/or carbon dioxide in their structure that will be driven off at elevated temperatures soaking up heat energy. If the batch contains alumina or a clay, such materials also have a high melting point and may also contain chemical water that requires extra heat energy to bring such materials to the melting temperature of the glass batch. If one or more of these batch ingredients are preheated before combining or mixing with the other ingredients, or if the total batch is preheated, the batch will be converted to molten glass much faster in the glass melting furnace than if they are not preheated, and the capacity of the glass melting furnace to produce good quality molten glass will be substantially increased. The invention is applicable to all types of glass melting furnaces.

The invention comprises a method of generating electricity by using a heat engine, feeding high pressure, hot gases to the heat engine to drive an electrical generator, exhausting hot gases from the heat engine, using the electrical power generated to power one or more motors and using the hot exhaust gases to preheat one or more ingredients of a glass batch and feeding the preheated one or more ingredients of the glass batch into a glass melting furnace to substantially increase the melting capacity of the glass melting furnace. As used herein, high pressure, hot gases is meant a gas or mixture of gases having a pressure of at least about 4 psi gauge and a temperature of at least about 600 degrees C.

The invention also includes a system for generating electricity and for producing molten glass comprising a heat engine, a combustion system for feeding high pressure, hot gases to the heat engine, an electrical generator driven by the heat engine, an exhaust duct for receiving hot gas exhaust from the heat engine, the exhaust duct for the hot exhaust gas(es) connected to a material preheater and the material preheater comprising an enclosure for conveying the preheated material, directly or indirectly, to a batch feeder on the feeding batch into a melting furnace. The heat engine can include a gas turbine or any other type of engine that uses hot gases to provide power to turn an electrical generator. The material preheater can be any conventional material heater used to raise the temperature of particulate materials including, but not limited to static heat exchangers like and similar to that disclosed herein, rotary dryer, rotary kiln, fluid bed heater, vibrating fluid bed heater, vibrating conveyor oven, and conveyor belt oven or kiln.

When the word "about" is used herein it is meant that the amount or condition it modifies can vary some beyond that as long as the advantages of the invention are realized. Practically, there is rarely the time or resources available to very precisely determine the limits of all of the parameters of ones invention because to do so would require an effort far greater than can be justified at the time the invention is being developed to a commercial reality. The skilled artisan understands this and expects that the disclosed results of the invention might extend, at least somewhat, beyond one or more of the limits disclosed. Later, having the benefit of the inventors disclosure and understanding the inventive concept and embodiments disclosed including the best mode known to the inventor, the inventor and others can, without inventive effort, explore beyond the limits disclosed to determine if the invention is realized beyond those limits and, when embodiments are found having no further unexpected characteristics, the limits of those embodiments are within the meaning of the term about as used herein. It is not difficult for the artisan or others to determine whether such an embodiment is either as expected or, because of either a break in the continuity of results or one or more features that are significantly better than those reported by the inventor, is surprising and thus an unobvious teaching leading to a further advance in the art.

### Brief Description of Drawings

Figure 1 is a schematic of a conventional gas turbine electrical generating system.
Figure 2 is a schematic of a glass melting furnace and one embodiment of a glass batch preheating system of the invention.
Figure 3 is a schematic of a glass melting furnace and one embodiment of a material preheating system of the invention.

### Details of Preferred Embodiments

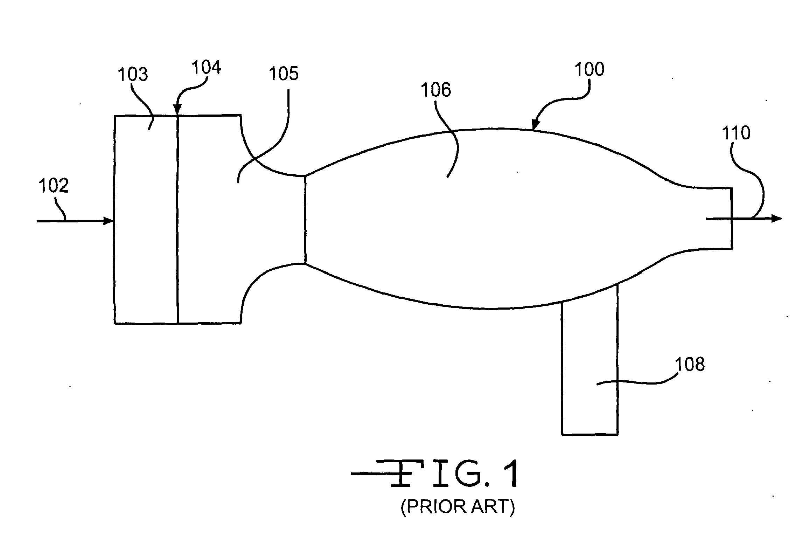

Figure 1 is a schematic of a typical gas turbine driven electrical generating system 1. In this system an oxidizing gas 102 including air, oxygen or an oxygen rich mixture is fed to a compressor 103, driven by a gas turbine 106. The oxidizing gas 102 is compressed and as it exits the compressor 103 into a combustion chamber 105, is mixed with a fuel 104 and ignited producing high pressure hot gases 107 that pass through the gas turbine 106 impacting blades in the turbine 106 causing them to rotate a shaft that drives the compressor 102 and an electrical generator 108 generating electricity. The high pressure hot gases 107 loose pressure as they expend work on the turbine blades and exit the gas turbine 106 as low pressure or atmospheric pressure hot gases 110, usually at a temperature of at least about 700 degrees F. or higher. Exhaust gas 110 temperatures of 1000 degrees F. or higher are fairly common.

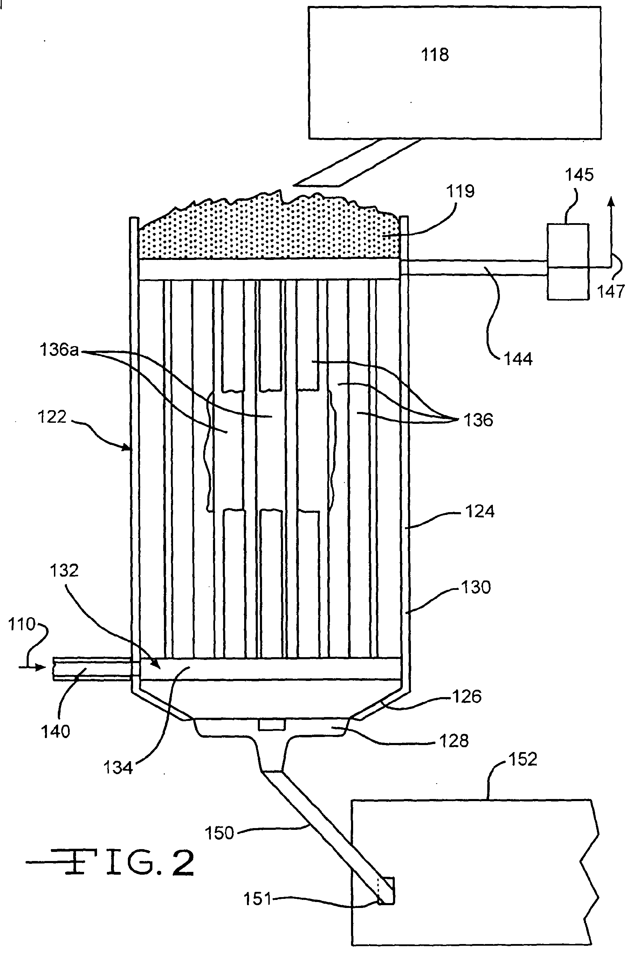

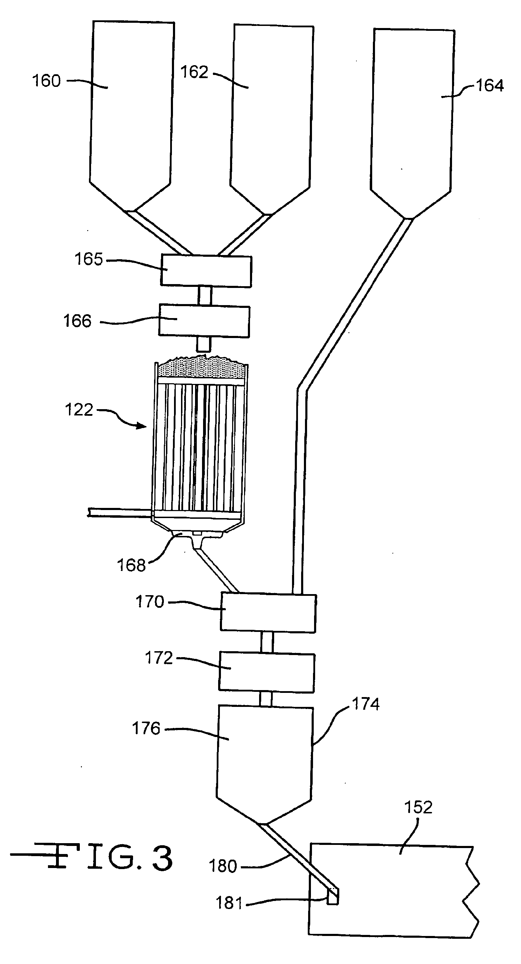

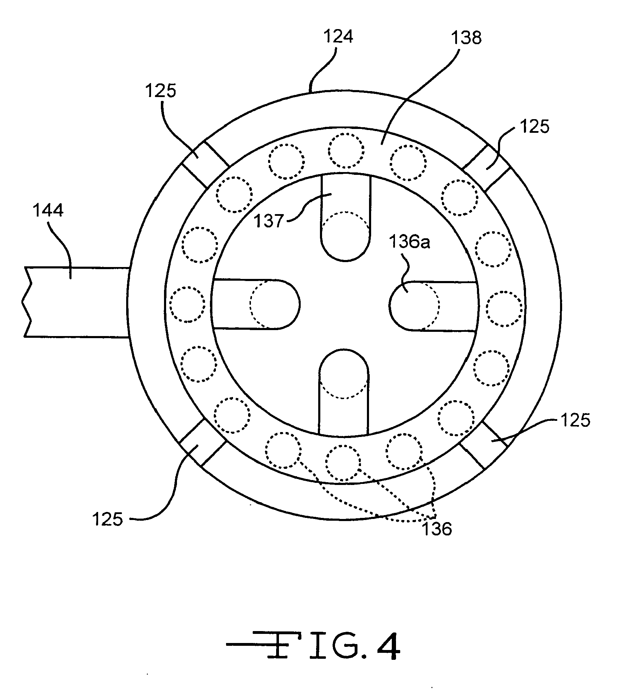

In the invention, the hot exhaust gases 110 are used in a system like that shown in Figure 2 for preheating glass batch or in a system like that shown in Figure 3 for preheating one or more ingredients, typically major ingredients, of a glass batch, both in preparation for a furnace for making molten glass. In the system of Figure 2, glass batch 120, prepared in a conventional glass batching system 118, is fed into material preheater 122. The material preheater 122 is comprised of a shell 124, usually cylindrical or of an oval cross section, having a cone shaped bottom section 126 and, optionally, a live bottom 128, such as a Vibra Screw® Bin Activator^{™} available from Vibra Screw, Inc. of Totowa, NJ 07512, to insure uniform flow of preheated batch out of the preheater. The material preheater is optionally insulated on its exterior to conserve heat with a layer of insulation 130, such as 800 Series Spin-Glas®, HTB 26 Spin-Glas®, or HTB 23 Spin-Glas® insulation available from Johns Manville Corp. of Denver, CO, or other similar insulation products for use at the temperatures of the hot waste gases. The material preheater 122 also comprises an internal heat exchanger 132 comprised of a lower manifold 134, a plurality of generally vertical pipes 136 and an upper manifold 138. The lower manifold 134, generally vertical pipes 136 and the upper manifold 138 are made from a heat and abrasion resistant material such as an appropriate stainless steel alloy. By generally vertical pipes 136 is meant that the pipes extend vertical +/- 10 degrees up through the interior of the shell 124 some of the pipes 136 having a curved and/or horizontal portion on one or both ends to connect to the lower manifold 134 and/or the upper manifold 138. A typical top view of the heat exchanger 132 is shown in Figure 4. Hot gases 110, coming from the system shown in Figure 1, through a conventional insulated duct 140. More typically, the duct is comprised of a stainless steel tube or pipe insulated with the type of insulation described earlier.

An optional band 142 can be attached in any suitable manner to the upper manifold 138 to hold batch covering the upper manifold 138 and the curved or horizontal portions of the generally vertical pipes 136. Also, an optional enclosure (not shown) can be attached to the outlet of the glass batching system 118 and the top of the shell 124 or the optional band 142 to contain the batch and dust from the batch. The much cooled gases from the generally vertical pipes 136 enter the upper manifold 138 and exit the manifold 138 through a duct 144 and are either exhausted to the environment or sent through additional conventional processing equipment if desired or required.

Figure 4 is a top view of the shell 124 and heat exchanger 132 shown in Figure 2. In this embodiment, the generally vertical pipes 136 are attached directly to the bottom of the upper manifold 138 while other generally vertical pipes 136a are offset from the upper manifold 138 and require a curved and/or horizontal section 137 to connect to them to the upper manifold 138. The lower portion of the heat exchanger 132 can be the same as the top portion shown here or can differ to take advantage of the higher temperature and higher rate of thermal conductivity in the lower portion of the heat exchanger 132 and the lower portion of the batch in the shell 124, e.g. all of the generally vertical pipes 136 can connect directly to the lower manifold 134.

In the operation of the batch preheating system shown in Figures 2 and 4, hot gases 110 are fed to the lower manifold 134. The hot gases pass through the lower manifold 132, into and through the generally vertical pipes 136 and 136a, into the upper manifold 138 and then exit through the duct 144. The hot gases 110 transfer heat to the glass batch 120 through the walls of all parts of the heat exchanger 132 except for the exit duct 144, loosing temperature as the gases progress through the heat exchanger 132. The preheated batch 150 in the lower portion of the shell 124 and in the cone portion 126 will have a temperature close to that of the hot gases 110 entering the lower manifold 132. This preheated batch 150 is then fed into an insulated bin (not shown) or into one or more conventional batch chargers (not shown) for feeding into a glass melting furnace 152 in a conventional manner. The preheated batch 150 will melt much faster than batch at near ambient temperature and permit the glass melting furnace 152 to either operate at lower temperatures using less fuel and less oxidizing gas, or will produce much more high quality molten glass than when operating with ambient temperature batch.

The embodiment shown in Figure 3 is used to preheat one or more major ingredients in the batch. A major ingredient is an ingredient of the glass batch that accounts for at least 10 wt. percent of the batch. In a typical E glass batch, one of the glass batches that requires the most energy and time to melt, the major ingredients would typically include a fine silica material, colemanite, lime or limestone, and clay. One or more of these ingredients, in the case of the system of Figure 2, fine silica 160 and either clay or limestone 162 are weighed or metered at the appropriate ratios in a known manner into a mixer 166 and after mixing, the mixture is fed into the preheater 122 containing the heat exchanger 132. The bin 124 and heat exchanger 132 can be the same as shown in Figure 2. Following preheating, preheated material 151 is metered or fed to a scale 170 where other ingredients, not preheated, from one or more other bins 164 are combined to form a desired glass batch. The unmixed glass batch is dumped into a mixer 172 and mixed, producing a preheated glass batch 176 that can either be fed into a holding bin 174 or fed directly to one or more conventional batch chargers (not shown) and fed into the glass melting furnace 152. The energy efficiency and or productivity gains of this system is as good or close to being as good as that of the system of Figure 2, and is particularly useful where one or more ingredients of the batch might cause problems if fed through the material preheater 122.

Other conventional kinds of material heaters can be used in place of the heat exchanger or preheater 122 including, but not limited to rotary kilns or heaters, fluid bed heaters, vibrating conveyor heaters, belt conveyor heaters, and conventional heat exchangers and tubular heat exchangers of different configurations than shown here.

Different embodiments employing the concept and teachings of the invention will be apparent and obvious to those of ordinary skill in this art and these embodiments are likewise intended to be within the scope of the claims. The inventor does not intend to abandon any disclosed inventions that are reasonably disclosed but do not appear to be literally claimed below, but rather intends those embodiments to be included in the broad claims either literally or as equivalents to the embodiments that are literally included.

## Claims

1. In a method of preparing a glass batch for a glass melting furnace comprising weighing out at least one major ingredient and one or more minor ingredients, all ingredients comprised of particulates, according to a desired recipe, mixing the at least one major ingredient and one or more minor ingredients together thoroughly and feeding the mixed batch to the glass melting furnace, the improvement comprising using waste hot exhaust gases from an electrical generating system comprising a heat engine to heat one or more of the ingredients or to heat the entire glass batch by passing the waste hot exhaust gases through a particulate heating device prior to feeding the batch into the glass melting furnace.

2. The method of claim 1 wherein the entire glass batch is heated with the waste hot exhaust gases in the particulate heating device prior to feeding the batch into the glass melting furnace.

3. The method of claim 1 wherein the one or more of the major ingredients are heated prior to mixing the heated one or more major ingredients with the other ingredients of the glass batch.

4. The method of claim 1, 2 or 3 wherein the temperature of waste hot exhaust gases is at least about 260 degrees C.

5. The method of claim 1 wherein the heating device is a static heat exchanger.

6. The method of claim 5 wherein the temperature of waste hot exhaust gases is at least about 260 degrees C.

7. The method of claim 2 or 3 wherein the device is a static heat exchanger and the temperature of waste hot exhaust gases is at least about 260 degrees C.

8. The method of claim 1, 2 or 3 wherein the heating device comprises a rotating drum.

9. The method of claim 1, 2 or 3 wherein the material being preheated is directly contacted by the waste hot exhaust gases.

10. The method of claim 1 wherein the heating device comprises a heat exchanger that prevents the waste hot exhaust gases from directly contacting the material being preheated.

11. In a system for preparing a batch for a glass melting furnace comprising a batch preparation system and a means for feeding batch into a glass melting furnace, the improvement comprising one or more ducts for carrying waste hot exhaust gases from an electrical generating system comprising a heat engine to a heat exchanger for preheating or one or more ingredients of the glass batch, the heat exchanger that will transfer more than 50 percent of the heat energy in the waste hot exhaust gases above ambient temperature in the hot exhaust gases to a particulate material comprising at least one ingredient of the glass batch, inclusive of the entire glass batch.

12. The system of claim 11 wherein the heat exchanger is static and comprises a plurality of pipes connected together inside a bin containing the glass batch or at least one ingredient of the glass batch.

13. The system of claim 11 wherein the heat exchanger comprises a rotating device for tumbling the particulate material while exposing the particulate material to the hot gases or to a hot surface of the rotating device.

14. The system of claim 11 wherein the device uses waste hot exhaust gases to heat the particulate material by directly contacting the particulate material with the waste hot exhaust gases.

15. The system of claim 11 wherein the heat exchanger is dynamic and comprises a vibrating component.

16. The system of claim 11 wherein the heat exchanger is dynamic and wherein the particulate material is not contacted by the waste hot exhaust gases.

17. In a system for preparing a batch for a glass melting furnace comprising a batch preparation system comprising a scale and a mixer and a means for feeding mixed batch into a glass melting furnace, the improvement comprising one or more ducts for carrying waste hot exhaust gases having a temperature of at least about 200 degrees C. from a heat engine in an electrical generating system to a heat exchanger for preheating the glass batch, the heat exchanger transferring more than 50 percent of the heat energy above ambient temperature in the waste hot exhaust gases to the batch prior to feeding the batch into the glass melting furnace.

18. The system of claim 5 wherein the heat exchanger is static and comprises a network comprising a plurality of pipes connected together inside a bin that contains the glass batch as the glass batch moves through the bin from a top to a bottom of the bin.
